# EUROPEAN PATENT APPLICATION

(11) **EP 4 509 591 A1**
(43) Date of publication of application: **19.02.2025**
(21) Application number: 23788088.5
(22) Date of filing: 10.03.2023
(51) Int. Cl.: C12G 3/04

(54) **ALCOHOLIC BEVERAGE CONTAINING MINERALS AND POLYSACCHARIDE**

(30) Priority: 11.04.2022 JP 2022065011
(71) Applicant: Suntory Holdings Limited, Osaka-shi, Osaka 530-8203 (JP)
(72) Inventor: YOSHIHARA, Kazuki, Kawasaki-shi, Kanagawa 211-0067 (JP); MATSUMOTO, Takehiro, Kawasaki-shi, Kanagawa 211-0067 (JP); OSADA, Tomoya, Kawasaki-shi, Kanagawa 211-0067 (JP); ZUSHI, Akane, Kawasaki-shi, Kanagawa 211-0067 (JP)
(74) Representative: Vossius & Partner Patentanwälte Rechtsanwälte mbB
(86) International application number: PCT/JP2023/009207
(87) International publication number: WO 2023/199666

(57) **Abstract**

The present invention addresses the problem of providing a means for suppressing tingling sensation caused by a mineral-containing alcoholic beverage that has not been thermally treated. The alcoholic beverage according to the present invention uses a specific polysaccharide and has a mineral content within a specific range.

## Description

### TECHNICAL FIELD

The present invention relates to an alcoholic beverage containing specific mineral(s) and a specific polysaccharide and a method related thereto.

### BACKGROUND ART

Not only alcoholic beverages but also many beverages contain minerals represented by sodium, potassium, calcium, and magnesium.

Meanwhile, beverages containing polysaccharides have been reported in recent years. For example, PTL 1 uses polysaccharides for improving the quality of the sweet taste of a beverage containing acesulfame potassium. PTL 2 uses dietary fiber for producing a beer taste alcoholic beverage with drinking satisfaction or a clear aftertaste.

### CITATION LIST

### PATENT LITERATURE

PTL 1: Japanese Patent Laid-Open No. 2018-088867
PTL 2: Japanese Patent Laid-Open No. 2017-063724

### SUMMARY OF INVENTION

### TECHNICAL PROBLEM

Beverages on market are usually assumed to be stored for a medium or long term and therefore often heat-treated for sterilization with some exceptions including non-perishable beverages with a high alcohol percentage.

It is however disadvantageous that heat treatment may change the tastes of beverages. A problem is also that facilities for practicing heat treatment are expensive. There has therefore been a need to produce beverages without heat treatment.

The present inventors have found that no heat treatment results in a markedly unpleasant tingling feeling derived from minerals such as sodium, potassium, calcium, and magnesium contained in a beverage. Furthermore, the present inventors have found that if the beverage contains alcohol, the tingling feeling of the minerals is enhanced. If the minerals are merely removed to reduce the tingling feeling, the flavor of the beverage is greatly influenced, so that the tastiness of the beverage itself may be deteriorated.

Accordingly, an object of the present invention is to provide means for suppressing the tingling feeling in a non-heat-treated alcoholic beverage containing minerals.

### SOLUTION TO PROBLEM

The present inventors have found that, if a specific polysaccharide is used and the content ratio between minerals is adjusted to be within a specified range, it is possible to effectively suppress the tingling feeling in a non-heat-treated alcoholic beverage containing minerals, and completed the present invention.

The present invention relates, but not limited to, the following.
1. A non-heat-treated alcoholic beverage,
   wherein a weight ratio of a content of sodium to the total content of sodium, potassium, calcium, and magnesium (Na/(Na + K + Ca + Mg)) in the beverage is 0.25 to 0.93, and
   the alcoholic beverage contains at least one polysaccharide selected from the group consisting of polydextrose, indigestible glucan, and indigestible dextrin.
2. The alcoholic beverage according to item 1, wherein the total content of the polysaccharide in the beverage is 0.2 to 10.0 w/v%.
3. The alcoholic beverage according to item 1 or 2, wherein the total content of sodium, potassium, calcium, and magnesium in the beverage is 0.01 to 15.0 ppm.
4. The alcoholic beverage according to any one of items 1 to 3, wherein temperature for the heat treatment is 45°C or more, and treatment time is 1 minute or more.
5. The alcoholic beverage according to any one of items 1 to 4, wherein an alcohol content is 1 to 15 v/v%.
6. The alcoholic beverage according to any one of items 1 to 5, containing carbon dioxide.
7. A method for producing a non-heat-treated alcoholic beverage containing minerals, including:
   mixing raw materials such that
   a weight ratio of a content of sodium to the total content of sodium, potassium, calcium, and magnesium (Na/(Na + K + Ca + Mg)) in the beverage is 0.25 to 0.93, and
   the alcoholic beverage contains alcohol and at least one polysaccharide selected from the group consisting of polydextrose, indigestible glucan, and indigestible dextrin.
8. A method for suppressing a tingling feeling in a non-heat-treated alcoholic beverage containing minerals, including:
   mixing raw materials such that
   a weight ratio of a content of sodium to the total content of sodium, potassium, calcium, and magnesium (Na/(Na + K + Ca + Mg)) in the beverage is 0.25 to 0.93, and
   the alcoholic beverage contains alcohol and at least one polysaccharide selected from the group consisting of polydextrose, indigestible glucan, and indigestible dextrin.

### ADVANTAGEOUS EFFECTS OF INVENTION

According to the present invention, the tingling feeling in a non-heat-treated alcoholic beverage containing minerals can be suppressed without deteriorating the aftertaste of the beverage markedly.

In an embodiment, the present invention can improve the tastiness as a beverage.

The "tingling feeling" caused by minerals and alcohol as used herein means a tingling stimulus of the aftertaste felt when a beverage is held in the mouth.

The "tastiness as a beverage" as used herein means that the body and umami are felt when the beverage is held in the mouth.

The "unpleasant aftertaste" as the problem considered in the beverage as used herein means that a tingling stimulus lasts when the beverage is held in the mouth.

### DESCRIPTION OF EMBODIMENTS

Hereinafter, a beverage of the present invention and a method related thereto will be described.

Note that the "ppm" as used herein means ppm by weight/volume (w/v), and this is synonymous with "mg/L" unless otherwise specified.

### (Minerals)

The beverage of the present invention contains mineral(s). The weight ratio of the content of sodium to the total content of sodium, potassium, calcium, and magnesium (Na/(Na + K + Ca + Mg)) in the beverage is 0.25 to 0.93, preferably 0.25 to 0.72, and more preferably 0.33 to 0.72.

The weight ratio between the minerals in such a range in combination with the polysaccharide can suppress the tingling feeling efficiently.

As long as the beverage of the present invention contains the minerals at the weight ratio, the contents of the minerals are not limited, and the total content of the minerals in the beverage of the present invention is preferably 0.01 to 15.0 ppm and more preferably 0.04 to 13.0 ppm. The beverage of the present invention may contain all the four minerals, or may contain only some thereof.

Each of the minerals contained in the beverage of the present invention may be in the form of a salt or ions. In this case, the mass thereof per 1 mol is substantially the same as the mass of the unionized mineral or metal per 1 mol. The contents or the concentrations of the minerals in the beverage (sample solution) according to the present invention can be measured by the well-known method using an ICP emission spectrophotometer.

In the present invention, the minerals can be added to the beverage in the form of salts that can be used for food and drink or in the form of deep sea water or seaweed extract containing these abundantly.

Examples of a salt that can provide sodium to the beverage of the present invention include sodium chloride, trisodium citrate, sodium gluconate, monosodium succinate, disodium succinate, sodium acetate, sodium DL-tartrate, sodium L-tartrate, sodium lactate, monosodium fumarate, sodium DL-malate, sodium nitrate, sodium sulfate, sodium hydroxide, sodium hydrogen carbonate, and sodium carbonate. In one embodiment, the beverage of the present invention accordingly contains a sodium salt such as one or more substances selected from the group consisting of sodium chloride, trisodium citrate, sodium gluconate, monosodium succinate, disodium succinate, sodium acetate, sodium DL-tartrate, sodium L-tartrate, sodium lactate, monosodium fumarate, sodium DL-malate, sodium nitrate, sodium sulfate, sodium hydroxide, sodium hydrogen carbonate, and sodium carbonate.

Examples of a salt that can provide potassium to the beverage of the present invention include potassium citrate, potassium chloride, potassium gluconate, potassium DL-tartrate, potassium L-tartrate, potassium nitrate, potassium hydroxide, potassium carbonate, potassium lactate, potassium sulfate, tripotassium phosphate, dipotassium hydrogen phosphate, and potassium dihydrogen phosphate. In one embodiment, the beverage of the present invention accordingly contains a potassium salt such as one or more substances selected from the group consisting of potassium citrate, potassium chloride, potassium gluconate, potassium DL-tartrate, potassium L-tartrate, potassium nitrate, potassium hydroxide, potassium carbonate, potassium lactate, potassium sulfate, tripotassium phosphate, dipotassium hydrogen phosphate, and potassium dihydrogen phosphate.

Examples of a salt that can provide calcium to the beverage of the present invention include calcium pantothenate, calcium lactate, calcium chloride, calcium gluconate, calcium silicate, calcium acetate, calcium hydroxide, calcium carbonate, calcium sulfate, tricalcium phosphate, calcium monohydrogen phosphate, and calcium dihydrogen phosphate. In one embodiment, the beverage of the present invention accordingly contains a calcium salt such as one or more substances selected from the group consisting of calcium pantothenate, calcium lactate, calcium chloride, calcium gluconate, calcium silicate, calcium acetate, calcium hydroxide, calcium carbonate, calcium sulfate, tricalcium phosphate, calcium monohydrogen phosphate, and calcium dihydrogen phosphate.

Examples of a salt that can provide magnesium to the beverage of the present invention include magnesium chloride, magnesium acetate, magnesium sulfate, magnesium silicate, magnesium hydroxide, magnesium carbonate, trimagnesium phosphate, and magnesium monohydrogen phosphate. In one embodiment, the beverage of the present invention accordingly contains a magnesium salt such as one or more substances selected from the group consisting of magnesium chloride, magnesium acetate, magnesium sulfate, magnesium silicate, magnesium hydroxide, magnesium carbonate, trimagnesium phosphate, and magnesium monohydrogen phosphate.

To regulate the weight ratio between the minerals in the beverage of the present invention, the amounts of the minerals, salts thereof, or mineral- or salt-containing ingredients for producing the beverage may be adjusted.

### (Alcohol)

The beverage of the present invention contains alcohol. The alcohol content in the beverage of the present invention is preferably 1 to 15 v/v%, more preferably 2 to 13 v/v%, more preferably 3 to 11 v/v%, and more preferably 4 to 9 v/v%. Another example of a preferable alcohol content is 5 to 15 v/v%.

If the alcohol content exceeds 15 v/v%, the alcohol stimulus is strong, and a large amount of the polysaccharide is necessary for masking the tingling feeling, and the tastiness of the beverage may be influenced.

The term "alcohol" as described herein means ethanol unless otherwise specified.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007). Alternatively, the alcohol content can be measured by HPLC or gas chromatography.

Alcohol may be incorporated into the beverage of the present invention by any means. The beverage of the present invention typically contains alcohol raw material, and thereby contains alcohol. The alcohol raw material is not particularly limited. Examples include spirits (rum, vodka, gin, tequila, and the like), liqueurs, whiskey, brandy, and *shochu.* Furthermore, the alcohol raw material may be brewage such as beer. The alcohol raw material is preferably whiskey, brandy, or a neutral spirit. These alcohol raw materials can be used alone or in combination of two or more.

The type of the alcoholic beverage of the present invention is not particularly limited, but examples of preferable embodiments thereof are *chuhai* (with reference to the present invention, *chuhai* means an alcoholic carbonated beverage obtained by diluting distilled liquor with another beverage such as water, soft drink, or tea.), a cocktail (with reference to the present invention, a cocktail means a beverage containing a spirit or liqueur, acidic fruit juice of citrus fruits or the like, a sweet component, and optionally carbon dioxide.), a sour (with reference to the present invention, a sour means a beverage containing a spirit, acidic fruit juice of citrus fruits or the like, a sweet component, and carbon dioxide), and the like.

### (Polysaccharide)

The beverage of the present invention contains at least one polysaccharide selected from the group consisting of polydextrose, indigestible glucan, and indigestible dextrin. The polysaccharide, in combination with the weight ratio between the minerals, can suppress the tingling feeling efficiently.

The content of the polysaccharide is not particularly limited, but the total content of the polysaccharide in the beverage of the present invention is 0.2 to 10.0 w/v% and preferably 0.4 to 5.0 w/v%.

The beverage of the present invention may contain only one or two polysaccharides, or may contain all the three polysaccharides. The beverage of the present invention may specifically contain polydextrose, indigestible glucan, or indigestible dextrin as the polysaccharide; may contain polydextrose and indigestible glucan, polydextrose and indigestible dextrin, or indigestible glucan and indigestible dextrin; or may contain polydextrose, indigestible glucan, and indigestible dextrin.

The meanings and the definitions of the above-mentioned polysaccharides are known to those skilled in the art, and the polysaccharides can be produced by a known method, or are available on the market. They will be briefly described below.

"Polydextrose" is water-soluble dietary fiber obtained by polymerizing glucose and sorbitol in the presence of citric acid. An example of commercially available polydextrose is "Litesse" (Danisco Japan Ltd.).

"Indigestible glucan" is indigestible ones among glucans (glucose polymer), and the sugar chains thereof may contain monosaccharides other than glucose or oligosaccharides containing these monosaccharides. Indigestible glucan is new water-soluble dietary fiber obtained by heat-polymerizing saccharides using activated carbon as a catalyst instead of an acid catalyst in recent years. Examples thereof include Fit Fiber #80 (registered trademark, produced by NIHON SHOKUHIN KAKO CO., LTD.).

"Indigestible dextrin", which is a type of dextrin, is an indigestible starch decomposition product that is scarcely digested with human digestive enzymes. For example, this can be obtained by hydrolyzing roasted dextrin with α-amylase and glucoamylase. Examples thereof include Sandec #150 (registered trademark, Sanwa Starch Co., Ltd.). The indigestible dextrin as used herein also includes hydrogenated, reduced indigestible dextrin.

The method for measuring the content of polysaccharide is not particularly limited. For example, HPLC can be used therefor. For example, the content of the polysaccharide can be measured by high performance liquid chromatography (enzyme-HPLC) that is a method for analyzing dietary fiber described in Eishin 13-go (Eishin No. 13) ("Eiyohyojikijun niokeru Eiyoseibun to no Bunsekihoho to nitsuite (Method for Analyzing Nutrient Components in Nutrition Labeling Standards)").

### (Heat treatment)

The beverage of the present invention is not heat-treated. The heat treatment of the beverage as used herein does not mean the heat treatment of raw materials or an intermediate of the beverage but the heat treatment of a beverage containing minerals, a polysaccharide, and alcohol. For example, in a step of mixing a polysaccharide with water not containing alcohol during the preparation of the beverage, the act of heating the mixture thereof for dissolution does not correspond to the "heat treatment" of the beverage of the present invention.

Typically, heat treatment of a beverage is conducted for heat sterilization. The heat sterilization may be performed before or after packaging the beverage. However, the beverage of the present invention should not be heat-treated at neither of these timings.

The conditions for the heat treatment are, but not particularly limited to, typically conditions for heat sterilization, for example, a temperature of 45°C or more and a treatment time of 1 minute or more, or a temperature of 60°C or more and a treatment time of 20 seconds or more. The temperature for heat treatment described herein means liquid temperature.

In the present invention, the raw materials or the intermediate may be heat-treated, or may not be heat-treated. In one embodiment, the raw materials and/or the intermediate of the beverage of the present invention is not heat-treated. In another embodiment, the raw materials and/or the intermediate of the beverage of the present invention is heat-treated.

### (Fruit juice or vegetable juice)

The beverage of the present invention may contain fruit juice and/or vegetable juice. The fruit juice may be in any form of straight juice, which is juice squeezed from fruits to be used as it is, or concentrated juice, which is obtained by concentrating the squeezed juice. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used. The vegetable juice can also be used in the same forms as the forms of the above-mentioned fruit juice.

Examples of fruit juices include, but are not limited to, juices from citrus fruits (*e.g.*, orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa, Citrus sphaerocarpa*), pomes (*e.g.,* apple, Japanese pear), drupes (*e.g.,* peach, Japanese apricot, apricot, Japanese plum, cherry), berries (*e.g.*, grape, blackcurrant, blueberry), tropical and subtropical fruits (*e.g.,* pineapple, guava, banana, mango, lychee), and fruity vegetables (*e.g.,* strawberry, melon, watermelon). Any one of the aforementioned fruit juices may be used alone, or two or more of them may be used in combination. Examples of vegetable juices include, but are not limited to, tomato juice, corn juice, pumpkin juice, and carrot juice. Any one of the aforementioned vegetable juices may be used alone, or two or more of them may be used in combination. Also, a fruit juice and a vegetable juice may be used in combination.

When the beverage of the present invention contains fruit juice(s), the content of the fruit juice in the beverage of the present invention is not particularly limited, and is typically 100 w/w% or less, or less than 10 w/w% in terms of percent fruit juice content.

In the present invention, the "percent fruit juice content" in a beverage shall be calculated according to the conversion expression mentioned below using the amount (g) of a fruit juice added to 100 ml of a sample. Further, calculation of concentration factor shall be made as per the JAS guidelines, with the proviso that the sugar refractometer index for a sugar, honey, or the like added to a fruit juice is excluded. Percent fruit juice content (w/w%) = <Amount of fruit juice added (g)> × <concentration factor>/100 mL/<density of beverage> × 100

The content of the vegetable juice in the beverage of the present invention is not particularly limited, and is typically 0 to 100 w/w%, or less than 10 w/w%. The content of the vegetable juice is calculated in accordance with the content of the fruit juice in terms of the above-mentioned percent fruit juice content.

### (Citrus fruit flavor or citrus fruit juice)

The present invention preferably contains citrus fruit flavor or citrus fruit juice. Examples of citrus fruits include orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa,* and *Citrus sphaerocarpa.* Oranges, lemons, grapefruits, and limes are preferable.

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by Tuchenhagen GmbH, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure is not particularly limited, and is preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is measured. The carbon dioxide pressure as used herein means carbon dioxide pressure at 20°C unless otherwise specified.

### (Other components)

As long as the effect of the present invention is not deteriorated, additives such as flavorings, vitamins, dyes, an antioxidant, a preservative, seasonings, extract, a pH adjustor, citric acid, and a quality stabilizer to be commonly blended into beverages can be blended into the beverage in the present invention in addition.

### (Packaged beverage)

The beverage of the present invention can be provided in the form of a packaged beverage. The form of the container includes, but not limited to, metal containers such as cans, PET bottles, cartons, bottles, and pouches.

### (Method)

In another embodiment, the present invention is a method for producing a non-heat-treated alcoholic beverage containing minerals. The method includes mixing raw materials such that the weight ratio of the content of sodium to the total content of sodium, potassium, calcium, and magnesium (Na/(Na + K + Ca + Mg)) in the beverage is 0.25 to 0.93, and the alcoholic beverage contains alcohol and at least one polysaccharide selected from the group consisting of polydextrose, indigestible glucan, and indigestible dextrin. The raw materials include the minerals or an ingredient (fruit juice or the like) containing the minerals, water, alcohol, and the polysaccharide or an ingredient containing thereof. Other raw materials are obvious from the above descriptions of the beverage. Since this method can suppress the tingling feeling in the non-heat-treated alcoholic beverage containing the minerals, in another embodiment, the method is also a method for suppressing the tingling feeling in the beverage.

The methods for adjusting the weight ratio between the minerals in the beverage is obvious from the above descriptions of the beverage. The timing thereof is not limited, either. For example, the above-mentioned steps may be performed at the same time, separately, or in random order. The finally obtained beverage only has to satisfy the above-mentioned conditions. The preferable ranges of the contents of the above-mentioned components or the like are as mentioned above with reference to the beverage. Furthermore, the specific examples and the amounts of additional other components are also as mentioned above with reference to the beverage.

### (Numerical range)

In the description for clarification, the numerical ranges as used herein include their end points, namely the lower limit values and the upper limit values. For example, the range represented by "1 to 2" includes 1 and 2.

### EXAMPLES

Hereinafter, the present invention will be described based on Test Examples, but the present invention is not limited to these examples.

Hereinafter, "the mineral weight ratio" described in tables means the weight ratio of the content of sodium to the total content of sodium, potassium, calcium, and magnesium (Na/(Na + K + Ca + Mg)) unless otherwise specified.

### (Test Example 1) Occurrence of tingling feeling

This Test Example will show that alcohol and heat treatment influence an unpleasant tingling feeling derived from minerals.

Specifically, sodium chloride, potassium chloride, calcium chloride, and magnesium chloride for providing minerals were dissolved in water in predetermined amounts, and alcohol for raw material was mixed in a predetermined amount to prepare a beverage. The obtained beverage was filled into a glass bottle with a capacity of 100 mL as a container to obtain the beverage sample with an alcohol content of 5 v/v% of Comparative Example 1. Heat treatment was not performed. Note that the above-mentioned salts were chosen for the experiment since the tastes of these salts themselves had little influence.

A beverage was obtained through the same operation using the same raw materials as mentioned above and filled into a glass bottle with a capacity of 100 mL as a container. The obtained packaged beverage was then heat-treated at 45°C for 1 minute to obtain the beverage sample with an alcohol content of 5 v/v% of Comparative Example 2.

The beverage sample with an alcohol content of 0 v/v% of Comparative Example 3 was finally obtained for comparison through the same operation as in Comparative Example 1 except that alcohol for raw materials was not used. Heat treatment was not performed.

The following table shows whether the obtained sample beverages were heated or not, and the contents of the minerals, the mineral weight ratios, the polysaccharide contents of the sample beverages.

Four trained panelists sensorily evaluated the obtained beverage samples for the "tingling feeling", the "unpleasant aftertaste", and the "tastiness as a beverage". Criteria for evaluating the "tingling feeling" and the "unpleasant aftertaste" were as follows.

6 points: Not felt at all
5 points: Scarcely felt
4 points: Not quite felt
3 points: Slightly felt
2 points: Felt
1 point: Strongly felt

Criteria for evaluating the "tastiness as a beverage" is as follows.

6 points: Strong felt
5 points: Felt
4 points: Slightly felt
3 points: Not quite felt
2 points: Scarcely felt
1 point: Not felt at all

The average values of the scores of the items were then calculated, and the beverage samples were evaluated as follows according to the average values.

+++: The average score is 5 points or more.
++: The average score is 4 points or more and less than 5 points.
+: The average score is 3 points or more and less than 4 points.
±: The average score is 2 points or more and less than 3 points.
-: The average score is 1 point or more and less than 2 points.

The panelists established a consensus on the relationship between the scores and the tastes using standard samples corresponding to each of the scores for reducing individual differences in the evaluations.

Table 1 shows the results. "C 1", "C 2", and "C 3" indicate Comparative Examples 1, 2, and 3, respectively. The "tastiness" means the tastiness as a beverage.

**[Table 1]**

| | **Heating** | **Mineral (ppm)** | | | | | | **Flavor** | | | |
|---|---|---|---|---|---|---|---|---|---|---|---|
| | | **Na** | **K** | **Ca** | **Mg** | **Mineral weight ratio** | **Polysaccharid e w/v%** | **Tingling feeling** | **Unpleasan t aftertaste** | **Tastiness** | **Comment (Effect of masking tingling feeling and the like)** |
| C 1 | Not heated | 3.30 | 1.60 | 14.80 | 3.30 | 0.14 | 0.0 | +++ | ± | ± | |
| C 2 | Heated | 3.30 | 1.60 | 14.80 | 3.30 | 0.14 | 0.0 | ± | + | + | The tingling feeling is weak, and the beverage remains tasty. |
| C 3 | Not heated | 3.30 | 1.60 | 14.80 | 3.30 | 0.14 | 0.0 | - | + | + | Non-alcohol. The tingling feeling is originally weak, and the beverage remains tasty. |

Comparative Examples 1 and 2 revealed that no heat treatment results in a markedly unpleasant tingling feeling derived from minerals such as sodium, potassium, calcium, and magnesium contained in the beverage. Furthermore, Comparative Examples 1 and 3 revealed that if the beverage containing the minerals also contained alcohol, the tingling feeling of the minerals was increased.

Accordingly, the subsequent experiment examined an effect on the non-heat-treated beverages containing the minerals and alcohol.

### (Test Example 2) Influence of mineral weight ratio and polydextrose (alcohol: 5 v/v%)

Multiple non-heat-treated sample beverages with an alcohol content of 5 v/v% were prepared in the same way as Comparative Example 1 in Test Example 1. At the time, the amounts of the raw materials used were varied to regulate the mineral contents and the mineral weight ratio. Furthermore, polydextrose (Danisco Japan Ltd., Litesse) was used as a polysaccharide.

The following table shows the contents of the minerals, the mineral weight ratios, and the polysaccharide contents of the obtained sample beverages. The content of the polysaccharide is a value calculated in view of the purity of the used polysaccharide. The same is also true for the subsequent Test Examples.

The obtained sample beverages were sensorily evaluated in the same way as in Test Example 1. The following tables also shows the results.

**[Table 2A]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **feeling** | **Tingling Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste derived from the polysaccharide is felt. |
| 3.30 | 1.60 | 14.80 | 3.30 | 0.14 | 0.4 | ++ | + | ± | The masking effect is not felt. The unpleasant aftertaste derived from the polysaccharide is felt. |
| 3.30 | 1.60 | 14.80 | 3.30 | 0.14 | 2.0 | ++ | + | ± | The masking effect is not felt. The unpleasant aftertaste derived from the polysaccharide is felt. |
| 3.30 | 1.60 | 14.80 | 3.30 | 0.14 | 5.0 | ++ | + | ± | The masking effect is not felt. The unpleasant aftertaste derived from the polysaccharide is felt. |
| 3.30 | 1.60 | 14.80 | 3.30 | 0.14 | 10.0 | ++ | + | ± | The masking effect is not felt. The unpleasant aftertaste derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | ± | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0 10 | 0.25 | 10.0 | ± | + | ± | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | ± | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains tasty. |
| 1.70 | 0.80 | 0.50 | 0.30 | 0.52 | 11.0 | ± | ++ | ± | The masking effect is felt, but the unpleasant aftertaste derived from the polysaccharide is too strong. |

**[Table 2B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide wlv%** | **Tingling feeling** | **Unpleasant aftertaste** | **Tastiness** | **Comment (Effect of masking tingling feeling and the like)** |
| 1.90 | 0.60 | 10.10 | 0.05 | 0.72 | 0.0 | +++ | ± | + | The masking effect is not felt. |
| 1.90 | 0.60 | 0.10 | 0.05 | 0.72 | 0.2 | + | ± | + | The masking effect is slightly felt. |
| 1.90 | 0.60 | 0.10 | 0.05 | 0.72 | 0.4 | + | + | ++ | The masking effect is felt. The beverage also feels slightly thick and tasty. |
| 1.90 | 0.60 | 0.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 0.10 | 0.05 | 0.72 | 10.0 | ± | + | + | The masking effect is felt. The beverage remains tasty. |
| 1.90 | 0.60 | 0.10 | 0.05 | 0.72 | 11.0 | ± | ++ | ± | The masking effect is felt, but the unpleasant aftertaste derived from the polysaccharide is too strong. |
| 4.80 | 0.70 | 0.50 | 0.30 | 0.76 | 0.0 | +++ | ± | + | The masking effect is not felt. |
| 4.80 | 0.70 | 0.50 | 0.30 | 0.76 | 0.2 | + | ± | + | The masking effect is slightly felt. |
| 4.80 | 0.70 | 0.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | ± | + | The masking effect is slightly felt. |
| 4.80 | 0.70 | 0.05 | 0.05 | 0.86 | 0.4 | ± | ± | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | ± | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70 | 0.10 | 0.05 | 0.93 | 0.0 | +++ | ± | + | The masking effect is not felt. |
| 12.00 | 0.701 | 0.10 | 0.05 | 0.93 | 0.2 | + | ± | + | The masking effect is slightly felt. |
| 12.00 | 0.70 | 0.10 | 0.05 | 0.93 | 0.4 | ± | ± | ++ | The masking effect is felt. The beverage also feels slightly thick and tasty. |
| 12.00 | 0.70 | 0.10, | 0.05 | 0.93 | 2.0 | ± | ± | +++ | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | ± | The masking effect is felt, but the unpleasant aftertaste derived from the polysaccharide is too strong. |
| 20.00 | 0.70 | 10.10 | 0.05 | 0.96 | 0.0 | +++ | ± | ± | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | ± | The masking effect is not felt. The unpleasant aftertaste derived from the polysaccharide is felt. |
| 20.00 | 0.70 | 0.10 | 0.05 | 0.96 | 2.0 | ++ | + | ± | The masking effect is not felt. The unpleasant aftertaste. derived from the polysaccharide is felt. |
| 20.00 | 0.70 | 0.10 | 0.05 | 0.96 | 5.0 | ++ | + | ± | The masking effect is not felt. The unpleasant aftertaste derived from the polysaccharide is felt. |
| 20.00 | 0.70 | 0.10 | 0.05 | 0.96 | 10.0 | ++ | + | ± | The masking effect is not felt. The unpleasant aftertaste derived from the polysaccharide is felt. |
| 20.00 | 0,70 0.70 | 0.10 | 0.05 | 0.96 | 11.0 | ++ | + | ± | The masking effect is not felt. The unpleasant aftertaste derived from the polysaccharide is felt. |

If the polysaccharide was used at a mineral weight ratio in a specific range, it was possible to obtain a high effect. If the content of the polysaccharide was in a specific range, the aftertaste was excellent.

The same heat-treated sample beverage as Comparative Example 2 was then prepared. The same multiple sample beverages as Comparative Example 2 were further prepared except that polydextrose was added in predetermined amounts. The obtained sample beverages were sensorily evaluated in the same way as in Test Example 1.

The contents of the minerals, the mineral weight ratios, the contents of the polysaccharide, and the sensory evaluation results of the beverages will be shown below.

**[Table 2C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 13.30 1 | 0.14 | 0.0 | ± | + | + | The tingling feeling is originally weak, and the beverage remains tasty. |
| 3.30 | 1.60 | 14.80 | 13.30 | 0.14 | 0.2 | - | ± | ++ | The tingling feeling is originally weak, and the beverage also feels slightly thick and tasty. |
| 3.30 | 1.60 | 14.80 | 13.30 | 0.14 | 0.4 | - | ± | ++ | The tingling feeling is originally weak, and the beverage also feels slightly thick and tasty. |
| 3.30 | 1.60 | 14.80 | 13.30 | 0.14 | 2.0 | - | ± | ++ | The tingling feeling is originally weak, and the beverage also feels slightly thick and tasty. |
| 3.30 | 1.60 | 14.80 | 3.30 | 0.14 | 5.0 | - | ± | ++ | The tingling feeling is originally weak, and the beverage also feels slightly thick and tasty. |
| 3.30 | 1.60 | 14.80 | 13.30 | 0.14 | 10.0 | - | + | + | The tingling feeling is originally weak, and the beverage remains tasty. |
| 3.30 | 1.60 | 14.80 | 13.30 | 0.14 | 11.0 | - | ++ | ± | The unpleasant aftertaste derived from the polysaccharide is too strong. |

In the case of heat treatment, the tingling feeling was weak, and the effect of polysaccharide and the mineral weight ratio was scarcely observed.

### (Test Example 3) Influence of mineral weight ratio and polydextrose (alcohol: 15 v/v%)

The same experiment was performed as Test Example 2 except that the alcohol content was 15 v/v%; and non-heat-treated sample beverages were prepared and sensorily evaluated. As the polysaccharide, polydextrose was used.

The following tables show the contents of the minerals, the mineral weight ratios, the polysaccharide contents, and the sensory evaluation results of the obtained sample beverages.

**[Table 3A]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide wlv%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste derived from the polysaccharide is felt. |
| 3.30 | 1.60 | 14.80 | 3.30 | 0.14 | 0.4 | ++ | + | ± | The masking effect is not felt. The unpleasant aftertaste derived from the polysaccharide is felt. |
| 3.30 | 1.60 | 14.80 | 3.30 | 0.14 | 2.0 | ++ | + | ± | The masking effect is not felt. The unpleasant aftertaste derived from the polysaccharide is felt. |
| 3.30 | 1.60 | 14.80 | 3.30 | 0.14 | 5.0 | ++ | + | ± | The masking effect is not felt. The unpleasant aftertaste derived from the polysaccharide is felt. |
| 3.30 | 1.60 | 14.80 | 3.30 | 0.14 | 10.0 | ++ | + | ± | The masking effect is not felt. The unpleasant aftertaste derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | ± | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0.10 | 0.25 | 10.0 | ± | + | + | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | ± | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains. tasty. |
| 1.70 | 0.80 | 0.50 | 0.30 | 0.52 | 11.0 | ± | ++ | ± | The masking effect is felt, but the unpleasant aftertas derived from the polysaccharide is too strong. |

**[Table 3B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide. w/v%** | **Tingling feeling** | **Unpleasant aftertaste** | **Tastiness** | **Comment (Effect of masking tingling feeling and the like)** |
| 1.90 | 0.60 | 0.10 | 0.05 | 0.72 | 0.0 | +++ | ± | + | The masking effect is not felt. |
| 1.90 | 0.60 | 0.10 | 0.05 | 0.72 | 0.2 | ± | ± | + | The masking effect is slightly felt. |
| 1.90 | 0.60 | 0.10 | 0.05 | 0.72 | 0.4 | ± | ± | ++ | The masking effect is felt. The beverage also feels slightly thick and tasty. |
| 1.90 | 0.60 | 0.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 0.10 | 0.05 | 0.72 | 10.0 | ± | + | + | The masking effect is felt. The beverage remains tasty. |
| 1.90 | 0.60 | 0.10 | 0.05 | 0.72 | 11.0 | ± | ++ | ± | The masking effect is felt, but the unpleasant aftertaste derived from the polysaccharide is too strong. |
| 4.80 | 0.70 | 0.50 | 0.30 | 0.76 | 0.0 | +++ | + | + | The masking effect is not felt. |
| 4.80 | 0.70 | 0.50 | 0.30 | 0.76 | 0.2 | + | ± | + | The masking effect is slightly felt. |
| 4.80 | 0.70 | 0.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | ± | + | The masking effect is slightly felt. |
| 4.80 | 0.70 | 0.05 | 0.05 | 0.86 | 0.4 | ± | + | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | ± | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70 | 0.10 | 0.05 | 0.93 | 0.0 | +++ | ± | + | The masking effect is not felt. |
| 12.00 | 0.70 | 0.10 | 0.05 | 0.93 | 0.2 | + | ± | + | The masking effect is slightly felt. |
| 12.00 | 0.70 | 0.10 | 0.05 | 0.93 | 0.4 | ± | ± | ++ | The masking effect is felt. The beverage also feels slightly thick and tasty. |
| 12.00 | 0.70 | 0.10 | 0.05 | 0.93 | 2.0 | ± | ± | +++ | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | ± | The masking effect is felt, but the unpleasant aftertaste derived from the polysaccharide is too strong. |
| 20.00 | 0.70 | 0.10 | 0.05 | 0.96 | 0.0 | +++ | ± | ± | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | ± | The masking effect is not felt. The unpleasant aftertaste derived from the polysaccharide is felt. |
| 20.00 | 0.70 | 0.10 | 0.05 | 0.96 | 2.0 | ++ | + | ± | The masking effect is not felt. The unpleasant aftertaste derived from the polysaccharide is felt. |
| 20.00 | 0.70 | 0.10 | 0.05 | 0.96 | 5.0 | ++ | + | ± | The masking effect is not felt. The unpleasant aftertaste derived from the polysaccharide is felt. |
| 20.00 | 0.70 | 0.10 | 0.05 | 0.96 | 10.0 | ++ | + | ± | The masking effect is not felt. The unpleasant aftertaste derived from the polysaccharide is felt. |
| 20.00 | 0.70 | 0.10 | 0.05 | 0.96 | 11.0 | ++ | + | ± | The masking effect is not felt. The unpleasant aftertaste derived from the polysaccharide is felt. |

The same tendency was observed as in Test Example 2.

The same heat-treated sample beverage as Comparative Example 2 was then prepared except that the alcohol content was 15 v/v%. The same multiple sample beverages as Comparative Example 2 were further prepared except that polydextrose was added in predetermined amounts and the alcohol content was 15 v/v%. The obtained sample beverages were sensorily evaluated in the same way as in Test Example 1.

The contents of the minerals, the mineral weight ratios, the contents of the polysaccharide, and the sensory evaluation results of the beverages will be shown below.

**[Table 3C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **\| Comment (Effect of masking tingling feeling and the like)** |
| 3.30 | 1.60 | 14.80 | 3.30 | 0.14 | 0.0 | ± | + | + | The tingling feeling is originally weak, and the beverage remains tasty. |
| 3.30 | 1.60 | 14.80 | 3.30 | 0.14 | 0.2 | - | ± | ++ | The tingling feeling is originally weak, and the beverage also feels slightly thick and tasty. |
| 3.30 | 1.60 | 14.80 | 3.30 | 0.14 | 0.4 | - | ± | ++ | The tingling feeling is originally weak, and the beverage also feels slightly thick and tasty. |
| 3.30 | 1.60 | 14.80 | 3.30 | 0.14 | 2.0 | - | ± | ++ | The tingling feeling is originally weak, and the beverage also feels slightly thick and tasty. |
| 3.30 | 1.60 | 14.80 | 3.30 | 0.14 | 5.0 | - | ± | ++ | The tingling feeling is originally weak, and the beverage also feels slightly thick and tasty. |
| 3.30 | 1.60 | 14.80 | 3.30 | 0.14 | 10.0 | - | + | + | The tingling feeling is originally weak, and the beverage remains tasty. |
| 3.30 | 1.60 | 14.80 | 3.30 | 0.14 | 11.0 | - | ++ | ± | The unpleasant aftertaste derived from the polysaccharide is too strong. |

In the case of the heat treatment, the tingling feeling was weak, and the effect of the polysaccharide or the mineral weight ratio was scarcely observed.

### (Test Example 4) Influence of mineral weight ratio and indigestible glucan (alcohol: 5 v/v%)

Indigestible glucan (NIHON SHOKUHIN KAKO Co., Ltd., Fit Fiber #80) was substituted for polydextrose, and the same experiment was performed as Test Example 2.

The following table shows the contents of the minerals, the mineral weight ratios, the polysaccharide contents, and the sensory evaluations of the obtained sample beverages.

**[Table 4A]**

| **Mineral (ppm)** | | | | | | **Flavor** | | | |
|---|---|---|---|---|---|---|---|---|---|
| **Na** | **K** | **Ca** | **Mg** | **Mineral weight** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste derived from the polysaccharide is felt. |
| 3.30 | 1.60 | 14.80 | 3.30 | 0.14 | 0.4 | ++ | + | ± | The masking effect is not felt. The unpleasant aftertaste derived from the polysaccharide is felt. |
| 3.30 | 1.60 | 14.80 | 3.30 | 0.14 | 2.0 | ++ | + | ± | The masking effect is not felt. The unpleasant aftertaste derived from the polysaccharide is felt. |
| 3.30 | 1.60 | 14.80 | 3.30 | 0.14 | 5.0 | ++ | + | ± | The masking effect is not felt. The unpleasant aftertaste derived from the polysaccharide is felt. |
| 3.30 | 1.60 | 14.80 | 3.30 | 0.14 | 10.0 | ++ | + | ± | The masking effect is not felt. The unpleasant aftertaste derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | ± | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0.10 | 0.25 | 10.0 | ± | + | + | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick. and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | ± | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains tasty. |
| 1.70 | 0.80 | 0.50 | 0.30 | 0.52 | 11.0 | ± | ++ | ± | The masking effect is felt, but the unpleasant aftertaste derived from the polysaccharide is too strong. |

**[Table 4B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide wlv%** | **Tingling feeling** | **Unpleasant aftertaste** | **Tastiness** | **Comment (Effect of masking tingling feeling and the like)** |
| 1.90 | 0.60 | 0.10 | 0.05 | 0.72 | 0.0 | +++ | ± | + | The masking effect is not felt. |
| 1.90 | 0.60 | 10.10 | 10.05 | 0.72 | 0.2 | + | ± | + | The masking effect is slightly felt. |
| 1.90 | 0.60 | 10.10 | 0.05 | 0.72 | 0.4 | ± | ± | ++ | The masking effect is felt. The beverage also feels slightly thick and tasty. |
| 1.90 | 0.60 | 10.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 10.10 | 0.05 | 0.72 | 10.0 | ± | + | + | The masking effect is felt. The beverage remains tasty. |
| 1.90 | 0.60 | 10.10 | 0.05 | 0.72 | 11.0 | ± | ++ | ± | The masking effect is felt, but the unpleasant aftertaste derived from the polysaccharide is too strong. |
| 4.80 | 0.70 | 0.50 | 0.30 1 | 0.76 | 0.0 | +++ | ± | + | The masking effect is not felt. |
| 4.80 | 0.70 | 0.50 | 0.30 | 0.76 | 0.2 | + | ± | + | The masking effect is slightly felt. |
| 4.80 | 0.70 | 10.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | ± | + | The masking effect is slightly felt. |
| 4.80 | 0.70 | 0.05 | 0.05 | 0.86 | 0.4 | ± | ± | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | ± | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70. | 0.10 | 0.05 | 0.93 | 0.0 | +++ | ± | + | The masking effect is not felt. |
| 12.00, | 0.70 | 0.10 | 0.05 | 0.93 | 0.2 | + | ± | + | The masking effect is slightly felt. |
| 12.00 | 0.70 | 0.10 | 0.05 | 0.93 | 0.4 | ± | ± | ++ | The masking effect is felt. The beverage also feels slightly thick and tasty. |
| 12.00 | 0.70 | 0.10 | 0.05 | 0.93 | 2.0 | ± | ± | +++ | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | ± | The masking effect is felt, but the unpleasant aftertaste derived from the polysaccharide is too strong. |
| 20.00 | 0.70 | 0.10 | 0.05 | 0.96 | 0.0 | +++ | ± | ± | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | ± | The masking effect is not felt. The unpleasant aftertaste derived from the polysaccharide is felt. |
| 20.00 | 0.70 | 0.10 | 0.05 | 0.96 | 2.0 | ++ | + | ± | The masking effect is not felt. The unpleasant aftertaste derived from the polysaccharide is felt. |
| 20.00 | 0.70 | 0.10 | 0.05 | 0.96 | 5.0 | ++ | + | ± | The masking effect is not felt. The unpleasant aftertaste derived from the polysaccharide is felt. |
| 20.00 | 0.70 | 0.10 | 0.05 | 0.96 | 10.0 | ++ | + | ± | The masking effect is not felt. The unpleasant aftertaste derived from the polysaccharide is felt. |
| 20.00 | 0.70 | 0.10 | 0.05 | 0.96 | 11.0 | ++ | + | ± | The masking effect is not felt. The unpleasant aftertaste derived from the polysaccharide is felt. |

The same tendency was observed as Test Example 2.

The same heat-treated sample beverage as Comparative Example 2 was then prepared. The same multiple sample beverages as Comparative Example 2 were further prepared except that indigestible glucan was added in predetermined amounts. The obtained sample beverages were sensorily evaluated in the same way as in Test Example 1.

The contents of the minerals, the mineral weight ratios, the contents of the polysaccharide, the sensory evaluation results of the beverages will be shown below.

**[Table 4C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | ± | + | + | The tingling feeling is originally weak, and the beverage remains tasty. |
| 3.30 | 1.60 | 14.80 | 3.30 | 0.14 | 0.2 | - | ± | ++ | The tingling feeling is originally weak, and the beverage also feels slightly thick and tasty. |
| 3.30 | 1.60 | 14.80 | 3.30 | 0.14 | 0.4 | - | ± | ++ | The tingling feeling is originally weak, and the beverage also feels slightly thick and tasty. |
| 3.30 | 1.60 | 14.80 | 3.30 | 0.14 | 2.0 | - | ± | ++ | The tingling feeling is originally weak, and the beverage also feels slightly thick and tasty. |
| 3.30 | 1.60 | 4.80 | 3.30, | 0.14 | 5.0 | - | + | ++ | The tingling feeling is originally weak, and the beverage also feels slightly thick and tasty. |
| 3.30 | 1.60 | 14.80 | 3.30 | 0.14 | 10.0 | - | + | + | The tingling feeling is originally weak, and the beverage remains tasty. |
| 3.30 | 1.60 | 14.80 | 3.30 | 0.14 | 11.0 | - | ++ | ± | The unpleasant aftertaste derived from the polysaccharide is too strong. |

In the case of the heat treatment, the tingling feeling was weak, and the effect of the polysaccharide or the mineral weight ratio was scarcely observed.

### (Test Example 5) Influence of mineral weight ratio and indigestible glucan (alcohol: 15 v/v%)

Indigestible glucan (NIHON SHOKUHIN KAKO Co., Ltd., Fit Fiber #80) was substituted for polydextrose, and the same experiment was performed as in Test Example 3.

The following tables show the contents of the minerals, the mineral weight ratios, the polysaccharide contents, and the sensory evaluation results of the obtained sample beverages.

**[Table 5A]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste derived from the polysaccharide is felt. |
| 3.30 | 1.60 | 14.80 | 3.30 | 0.14 | 0.4 | ++ | + | ± | The masking effect is not felt. The unpleasant aftertaste-derived from the polysaccharide is felt. |
| 3.30 | 1.60 | 14.80 | 3.30 | 0.14 | 2.0 | ++ | + | ± | The masking effect is not felt. The unpleasant aftertaste derived from the polysaccharide is felt. |
| 3.30 | 1.60 | 14.80 | 3.30 | 0.14 | 5.0 | ++ | + | ± | The masking effect is not felt. The unpleasant aftertaste derived from the polysaccharide is felt. |
| 3.30 | 1.60 | 14.80 | 3.30 | 0.14 | 10.0 | ++ | + | ± | The masking effect is not felt. The unpleasant aftertaste derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | ± | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0.10 | 0.25 | 10.0 | ± | + | + | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | ± | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains tasty. |
| 1.70 | 0.80 | 0.50 | 0.30 | 0.52 | 11.0 | ± | ++ | ± | The masking effect is felt, but the unpleasant aftertaste derived from the polysaccharide is too strong. |

**[Table 5B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 1.90 | 0.60 | 0.10 | 0.05 | 0.72 | 0.0 | +++ | ± | + | The masking effect is not felt. |
| 1.90 | 0.60 | 0.10 | 0.05 | 0.72 | 0.2 | + | ± | + | The masking effect is slightly felt. |
| 1.90 | 0.60 | 0.10 | 0.05 | 0.72 | 0.4 | ± | ± | ++ | The masking effect is felt. The beverage also feels slightly thick and tasty. |
| 1.90 | 0.60 | 0.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 0.10 | 0.05 | 0.72 | 10.0 | ± | + | + | The masking effect is felt. The beverage remains tasty. |
| 1.90 | 0.60 | 0.10 | 0.05 | 0.72 | 11.0 | ± | ++ | ± | The masking effect is felt, but the unpleasant aftertaste derived from the polysaccharide is too strong. |
| 4.80 | 0.70 | 0.50 | 0.30 | 0.76 | 0.0 | +++ | ± | + | The masking effect is not felt. |
| 4.80 | 0.70 | 0.50 | 0.30 | 0.76 | 0.2 | + | ± | + | The masking effect is slightly felt. |
| 4.80 | 0.70 | 0.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | ± | + | The masking effect is slightly felt. |
| 4.80 | 0.70 | 0.05 | 0.05 | 0.86 | 0.4 | ± | ± | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | ± | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70 | 0.10 | 0.05 | 0.93 | 0.0 | +++ | ± | + | The masking effect is not felt. |
| 12.00 | 0.70 | 0.10 | 0.05 | 0.93 | 0.2 | + | ± | + | The masking effect is slightly felt. |
| 12.00 | 0.70 | 0.10 | 0.05 | 0.93 | 0.4 | ± | ± | ++ | The masking effect is felt. The beverage also feels slightly thick and tasty. |
| 12.00 | 0.70 | 0.10 | 0.05 | 0.93 | 2.0 | ± | ± | + | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | ± | The masking effect is felt, but the unpleasant aftertaste derived from the polysaccharide is too strong. |
| 20.00 | 0.70 | 0.10 | 0.05 | 0.96 | 0.0 | +++ | ± | ± | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | ± | The masking effect is not felt. The unpleasant aftertaste derived from the polysaccharide is felt. |
| 20.00 | 0.70 | 0.10 | 0.05 | 0.96 | 2.0 | ++ | + | ± | The masking effect is not felt. The unpleasant aftertaste derived from the polysaccharide is felt. |
| 20.00 | 0.70 | 0.10 | 0.05 | 0.96 | 5.0 | ++ | + | ± | The masking effect is not felt. The unpleasant aftertaste-derived from the polysaccharide is felt. |
| 20.00 | 0.70 | 0.10 | 0.05 | 0.96 | 10.0 | ++ | + | ± | The masking effect is not felt. The unpleasant aftertaste-derived from the polysaccharide is felt. |
| 20.00 | 0.70 | 0.10 | 0.05 | 0.96 | 11.0 | ++ | + | ± | The masking effect is not felt. The unpleasant aftertaste derived from the polysaccharide is felt. |

The same tendency was observed as Test Example 4.

The same heat-treated sample beverage as Comparative Example 2 was then prepared except that the alcohol content was 15 v/v%. The same multiple sample beverages as Comparative Example 2 were further prepared except that indigestible glucan was added in predetermined amounts and the alcohol content was 15 v/v%. The obtained sample beverages were sensorily evaluated in the same way in Test Example 1.

The content of the minerals, the mineral weight ratios, the contents of the polysaccharide, and the sensory evaluation results of the beverages will be shown below.

**[Table 5C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | + | + | + | The tingling feeling is originally weak, and the beverage remains tasty. |
| 3.30 | 1.60 | 14.80 | 3.30 | 0.14 | 0.2 | - | ± | ++ | The tingling feeling is originally weak, and the beverage also feels slightly thick and tasty. |
| 3.30 | 1.60 | 14.80 | 3.30 | 0.14 | 0.4 | - | ± | ++ | The tingling feeling is originally weak, and the beverage also feels slightly thick and tasty. |
| 3.30 | 1.60 | 4.80 | 3.30 | 0.14 | 2.0 | - | ± | ++ | The tingling feeling is originally weak, and the beverage also feels slightly thick and tasty. |
| 3.30 | 1.60 | 14.80 | 3.30 | 0.14 | 5.0 | - | ± | ++ | The tingling feeling is originally weak, and the beverage also feels slightly thick and tasty. |
| 3.30 | 1.60 | 14.80 | 3.30 | 0.14 | 10.0 | - | + | + | The tingling feeling is originally weak, and the beverage remains tasty. |
| 3.30 | 1.60 | 14.80 | 3.30 | 0.14 | 11.0 | - | ++ | ± | The unpleasant aftertaste derived from the polysaccharide is too strong. |

In the case of the heat treatment, the tingling feeling was weak, and the effect of the polysaccharide or the mineral weight ratio was scarcely observed.

### (Test Example 6) Influence of mineral weight ratio and indigestible dextrin (alcohol: 5 v/v%)

Indigestible dextrin (Sanwa Starch Co., Ltd., Sandec #150) was substituted for polydextrose, and the same experiment was performed as in Test Example 2.

The following tables show the contents of the minerals, the mineral weight ratios, the contents of the polysaccharide, and the sensory evaluation results of the beverages.

**[Table 6A]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste-derived from the polysaccharide is felt. |
| 3.30 | 1.60 | 14.80 | 3.30 | 0.14 | 0.4 | ++ | + | ± | The masking effect is not felt. The unpleasant aftertaste derived from the polysaccharide is felt. |
| 3.30 | 1.60 | 14.80 | 3.30 | 0.14 | 2.0 | ++ | + | ± | The masking effect is not felt. The unpleasant aftertaste derived from the polysaccharide is felt. |
| 3.30 | 1.60 | 14.80 | 3.30 | 0.14 | 5.0 | ++ | + | ± | The masking effect is not felt. The unpleasant aftertaste derived from the polysaccharide is felt. |
| 3.30 | 1.60 | 14.80 | 0.30 | 0.14 | 10.0 | ++ | + | ± | The masking effect is not felt. The unpleasant aftertaste-derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | ± | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0.10 | 0.25 | 10.0 | ± | + | + | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | + | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains tasty. |
| 1.70 | 0.80 | 0.50 | 0.30 | 0.52 | 11.0 | ± | ++ | ± | The masking effect is felt, but the unpleasant aftertaste derived from the polysaccharide is too strong. |

**[Table 6B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 1.90 | 0.60 | 0.10 | 0.05 | 0.72 | 0.0 | +++ | ± | + | The masking effect is not felt. |
| 1.90 | 0.60 | 0.10 | 0.05 | 0.72 | 0.2 | + | ± | + | The masking effect is slightly felt. |
| 1.90 | 0.60 | 0.10 | 0.05 | 0.72 | 0.4 | ± | ± | ++ | The masking effect is felt. The beverage also feels slightly thick and tasty. |
| 1.90 | 0.60 | 0.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 0.10 | 0.05 | 0.72 | 10.0 | ± | + | + | The masking effect is felt. The beverage remains tasty. |
| 1.90 | 0.60 | 0.10 | 0.05 | 0.72 | 11.0 | ± | ++ | + | The masking effect is felt, but the unpleasant aftertaste derived from the polysaccharide is too strong. |
| 4.80 | 0.70 | 0.50 | 0.30 | 0.76 | 0.0 | +++ | ± | + | The masking effect is not felt. |
| 4.80 | 0.70 | 0.50 | 0.30 | 0.76 | 0.2 | + | ± | + | The masking effect is slightly felt. |
| 4.80 | 0.70 | 0.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | + | + | The masking effect is slightly felt. |
| 4.80 | 0.70 | 0.05 | 0.05 | 0.86 | 0.4 | ± | ± | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | + | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70 | 0.10 | 0.05 | 0.93 | 0.0 | +++ | ± | + | The masking effect is not felt. |
| 12.00 | 0.70 | 0.10 | 0.05 | 0.93 | 0.2 | + | ± | + | The masking effect is slightly felt. |
| 12.00 | 0.70 | 0.10 | 0.05 | 0.93 | 0.4 | ± | ± | ++ | The masking effect is felt. The beverage also feels slightly thick and tasty. |
| 12.00 | 0.70 | 0.10 | 0.05 | 0.93 | 2.0 | ± | ± | +++ | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | + | The masking effect is felt, but the unpleasant aftertaste derived from the polysaccharide is too strong. |
| 20.00 | 0.70 | 0.10 | 0.05 | 0.96 | 0.0 | +++ | ± | ± | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | + | The masking effect is not felt. The unpleasant aftertaste-derived from the polysaccharide is felt. |
| 20.00 | 0.70 | 0.10 | 0.05 | 0.96 | 2.0 | ++ | + | ± | The masking effect is not felt. The unpleasant aftertaste derived from the polysaccharide is felt. |
| 20.00 | 0.70 | 0.10 | 0.05 | 0.96 | 5.0 | ++ | + | ± | The masking effect is not felt. The unpleasant aftertaste derived from the polysaccharide is felt. |
| 20.00 | 0.70 | 0.10 | 0.05 | 0.96 | 10.0 | ++ | + | + | The masking effect is not felt. The unpleasant aftertaste-derived from the polysaccharide is felt. |
| 20.00 | 0.70 | 0.10 | 0.05 | 0.96 | 11.0 | ++ | + | ± | The masking effect is not felt. The unpleasant aftertaste-derived from the polysaccharide is felt. |

The same tendency was observed as in Test Example 2.

The same heat-treated sample beverage as Comparative Example 2 was then prepared. The same multiple sample beverages were further prepared as Comparative Example 2 except that indigestible dextrin was added in predetermined amounts. The obtained sample beverages were sensorily evaluated in the same way in Test Example 1.

The contents of the minerals, the mineral weight ratios, the contents of the polysaccharide, the sensory evaluation results of the beverages will be shown below.

**[Table 6C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | ± | + | + | The tingling feeling is originally weak, and the beverage remains tasty. |
| 3.30 | 1.60 | 14.80 | 3.30 | 0.14 | 0.2 | - | ± | ++ | The tingling feeling is originally weak, and the beverage also feels slightly thick and tasty. |
| 3.30 | 1.60 | 14.80 | 3.30 | 0.14 | 0.4 | - | ± | ++ | The tingling feeling is originally weak, and the beverage also feels slightly thick and tasty. |
| 3.30 | 1.60 | 14.80 | 3.30 | 0.14 | 2.0 | - | ± | ++ | The tingling feeling is originally weak, and the beverage also feels slightly thick and tasty. |
| 3.30 | 1.60 | 14.80 | 3.30 | 0.14 | 5.0 | - | ± | ++ | The tingling feeling is originally weak, and the beverage also feels slightly thick and tasty. |
| 3.30 | 1.60 | 14.80 | 3.30 | 0.14 | 10.0 | - | + | + | The tingling feeling is originally weak, and the beverage remains tasty. |
| 3.30 | 1.60 | 14.80 | 3.30 | 0.14 | 11.0 | - | ++ | ± | The unpleasant aftertaste derived from the polysaccharide is too strong. |

In the case of the heat treatment, the tingling feeling was weak, and the effect of polysaccharide or the mineral weight ratio was scarcely observed.

### (Test Example 7) Influence of mineral weight ratio and indigestible dextrin (alcohol: 15 v/v%)

Indigestible dextrin (Sanwa Starch Co., Ltd., Sandec #150) was substituted for polydextrose, and the same experiment was performed as in Test Example 3.

The following tables show the contents of the minerals, the mineral weight ratios, the polysaccharide contents, and the sensory evaluation results of the obtained sample beverages.

**[Table 7A]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | +++ | ± | ± | The masking effect is not felt. |
| 3.30 | 1.60 | 14.80 | 3.30 | 0.14 | 0.2 | ++ | + | ± | The masking effect is not felt. The unpleasant aftertaste-derived from the polysaccharide is felt. |
| 3.30 | 1.60 | 14.80 | 3.30 | 0.14 | 0.4 | ++ | + | ± | The masking effect is not felt. The unpleasant aftertaste derived from the polysaccharide is felt. |
| 3.30 | 1.60 | 14.80 | 3.30 | 0.14 | 2.0 | ++ | + | + | The masking effect is not felt. The unpleasant aftertaste-derived from the polysaccharide is felt. |
| 3.30 | 1.60 | 14.80 | 3.30 | 0.14 | 5.0 | ++ | + | + | The masking effect is not felt. The unpleasant aftertaste-derived from the polysaccharide is felt. |
| 3.30 | 1.60 | 14.80 | 3.30 | 0.14 | 10.0 | ++ | + | ± | The masking effect is not felt. The unpleasant aftertaste-derived from the polysaccharide is felt. |
| 3.30 | 1.60 | 14.80 | 3.30 | 0.14 | 11.0 | ++ | + | ± | The masking effect is not felt. The unpleasant aftertaste derived from the polysaccharide is felt. |
| 0.10 | 0.10 | 0.10 | 0.10 | 0.25 | 0.0 | +++ | ± | + | The masking effect is not felt. |
| 0.10 | 0.10 | 0.10 | 0.10 | 0.25 | 0.2 | + | ± | + | The masking effect is slightly felt. |
| 0.10 | 0.10 | 0.10 | 0.10 | 0.25 | 0.4 | + | ± | ++ | The masking effect is felt. The beverage also feels slightly thick and tasty. |
| 0.10 | 0.10 | 0.10 | 0.10 | 0.25 | 2.0 | ± | ± | +++ | The masking effect is felt. The beverage also feels thick and tasty. |
| 0.10 | 0.10 | 0.10 | 0.10 | 0.25 | 5.0 | ± | ± | ++ | The masking effect is felt. The beverage also feels slightly thick and tasty. |
| 0.10 | 0.10 | 0.10 | 0.10 | 0.25 | 10.0 | + | + | + | The masking effect is felt. The beverage remains tasty. |
| 0.10 | 0.10 | 0.10 | 0.10 | 0.25 | 11.0 | ± | ++ | ± | The masking effect is felt, but the unpleasant aftertaste derived from the polysaccharide is too strong. |
| 0.10 | 0.05 | 0.10 | 0.05 | 0.33 | 0.0 | +++ | ± | + | The masking effect is not felt. |
| 0.10 | 0.05 | 0.10 | 0.05 | 0.33 | 0.2 | + | ± | + | The masking effect is slightly felt. |
| 0.10 | 0.05 | 0.10 | 0.05 | 0.33 | 0.4 | ± | ± | ++ | The masking effect is felt. The beverage also feels slightly thick and tasty. |
| 0.10 | 0.05 | 0.10 | 0.05 | 0.33 | 2.0 | ± | ± | +++ | The masking effect is felt. The beverage also feels thick and tasty. |
| 0.10 | 0.05 | 0.10 | 0.05 | 0.33 | 5.0 | ± | ± | ++ | The masking effect is felt. The beverage also feels slightly thick and tasty. |
| 0.10 | 0.05 | 0.10 | 0.05 | 0.33 | 10.0 | ± | + | + | The masking effect is felt. The beverage remains tasty. |
| 0.10 | 0.05 | 0.10 | 0.05 | 0.33 | 11.0 | ± | ++ | ± | The masking effect is felt, but the unpleasant aftertaste derived from the polysaccharide is too strong. |
| 1.70 | 0.80 | 0.50 | 0.30 | 0.52 | 0.0 | +++ | ± | + | The masking effect is not felt. |
| 1.70 | 0.80 | 0.50 | 0.30 | 0.52 | 0.2 | + | ± | + | The masking effect is slightly felt. |
| 1.70 | 0.80 | 0.50 | 0.30 | 0.52 | 0.4 | ± | ± | ++ | The masking effect is felt. The beverage also feels slightly thick and tasty. |
| 1.70 | 0.80 | 0.50 | 0.30 | 0.52 | 2.0 | ± | ± | +++ | The masking effect is felt. The beverage also feels thick and tasty. |
| 1.70 | 0.80 | 0.50 | 0.30 | 0.52 | 5.0 | ± | ± | ++ | The masking effect is felt. The beverage also feels slightly thick and tasty. |
| 1.70 | 0.80 | 0.50 | 0.30 | 0.52 | 10.0 | ± | + | + | The masking effect is felt. The beverage remains tasty. |
| 1.70 | 0.80 | 0.50 | 0.30 | 0.52 | 11.0 | ± | ++ | + | The masking effect is felt, but the unpleasant aftertaste derived from the polysaccharide is too strong. |

**[Table 7B]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 1.90 | 0.60 | 0.10 | 0.05 | 0.72 | 0.0 | +++ | + | + | The masking effect is not felt. |
| 1.90 | 0.60 | 0.10 | 0.05 | 0.72 | 0.2 | + | ± | + | The masking effect is slightly felt. |
| 1.90 | 0.60 | 0.10 | 0.05 | 0.72 | 0.4 | ± | + | ++ | The masking effect is felt. The beverage also feels slightly thick and tasty. |
| 1.90 | 0.60 | 0.10 | 0.05 | 0.72 | 2.0 | ± | ± | +++ | The masking effect is felt. The beverage also feels thick and tasty. |
| 1.90 | 0.60 | 0.10 | 0.05 | 0.72 | 5.0 | ± | ± | ++ | The masking effect is felt. The beverage also feels slightly thick and tasty. |
| 1.90 | 0.60 | 0.10 | 0.05 | 0.72 | 10.0 | ± | + | + | The masking effect is felt. The beverage remains tasty. |
| 1.90 | 0.60 | 0.10 | 0.05 | 0.72 | 11.0 | ± | ++ | ± | The masking effect is felt, but the unpleasant aftertaste derived from the polysaccharide is too strong. |
| 4.80 | 0.70 | 0.50 | 0.30 | 0.76 | 0.0 | +++ | ± | + | The masking effect is not felt. |
| 4.80 | 0.70 | 0.50 | 0.30 | 0.76 | 0.2 | + | ± | + | The masking effect is slightly felt. |
| 4.80 | 0.70 | 0.50 | 0.30 | 0.76 | 0.4 | ± | ± | ++ | The masking effect is felt. The beverage also feels slightly thick and tasty. |
| 4.80 | 0.70 | 0.50 | 0.30 | 0.76 | 2.0 | ± | ± | +++ | The masking effect is felt. The beverage also feels thick and tasty. |
| 4.80 | 0.70 | 0.50 | 0.30 | 0.76 | 5.0 | ± | ± | ++ | The masking effect is felt. The beverage also feels slightly thick and tasty. |
| 4.80 | 0.70 | 0.50 | 0.30 | 0.76 | 10.0 | ± | + | + | The masking effect is felt. The beverage remains tasty. |
| 4.80 | 0.70 | 0.50 | 0.30 | 0.76 | 11.0 | ± | ++ | ± | The masking effect is felt, but the unpleasant aftertaste derived from the polysaccharide is too strong. |
| 4.80 | 0.70 | 0.05 | 0.05 | 0.86 | 0.0 | +++ | ± | + | The masking effect is not felt. |
| 4.80 | 0.70 | 0.05 | 0.05 | 0.86 | 0.2 | + | ± | + | The masking effect is slightly felt. |
| 4.80 | 0.70 | 0.05 | 0.05 | 0.86 | 0.4 | ± | ± | ++ | The masking effect is felt. The beverage also feels slightly thick and tasty. |
| 4.80 | 0.70 | 0.05 | 0.05 | 0.86 | 2.0 | ± | ± | +++ | The masking effect is felt. The beverage also feels thick and tasty. |
| 4.80 | 0.70 | 0.05 | 0.05 | 0.86 | 5.0 | ± | ± | ++ | The masking effect is felt. The beverage also feels slightly thick and tasty. |
| 4.80 | 0.70 | 0.05 | 0.05 | 0.86 | 10.0 | ± | + | + | The masking effect is felt. The beverage remains tasty. |
| 4.80 | 0.70 | 0.05 | 0.05 | 0.86 | 11.0 | ± | ++ | ± | The masking effect is felt, but the unpleasant aftertaste derived from the polysaccharide is too strong. |
| 12.00 | 0.70 | 10.10 | 0.05 | 0.93 | 0.0 | +++ | ± | + | The masking effect is not felt. |
| 12.00 | 0.70 | 10.10 | 0.05 | 0.93 | 0.2 | + | ± | + | The masking effect is slightly felt. |
| 12.00 | 0.70 | 10.10 | 0.05 | 0.93 | 0.4 | ± | ± | ++ | The masking effect is felt. The beverage also feels slightly thick and tasty. |
| 12.00 | 0.70 | 0.10 | 0.05 | 0.93 | 2.0 | ± | ± | +++ | The masking effect is felt. The beverage also feels thick and tasty. |
| 12.00 | 0.70 | 0.10 | 0.05 | 0.93 | 5.0 | ± | ± | ++ | The masking effect is felt. The beverage also feels slightly thick and tasty. |
| 12.00 | 0.70 | 0.10 | 0.05 | 0.93 | 10.0 | ± | + | + | The masking effect is felt. The beverage remains tasty. |
| 12.00 | 0.70 | 0.10 | 0.05 | 0.93 | 11.0 | ± | ++ | ± | The masking effect is felt, but the unpleasant aftertaste derived from the polysaccharide is too strong. |
| 20.00 | 0.70 | 0.10 | 0.05 | 0.96 | 0.0 | +++ | ± | + | The masking effect is not felt. |
| 20.00 | 0.70 | 0.10 | 0.05 | 0.96 | 0.2 | ++ | + | ± | The masking effect is not felt. The unpleasant aftertaste derived from the polysaccharide is felt. |
| 20.00 | 0.70 | 0.10 | 0.05 | 0.96 | 0.4 | ++ | + | ± | The masking effect is not felt. The unpleasant aftertaste-derived from the polysaccharide is felt. |
| 20.00 | 0.70 | 0.10 | 0.05 | 0.96 | 2.0 | ++ | + | ± | The masking effect is not felt. The unpleasant aftertaste derived from the polysaccharide is felt. |
| 20.00 | 0.70 | 0.10 | 0.05 | 0.96 | 5.0 | ++ | + | ± | The masking effect is not felt. The unpleasant aftertaste-derived from the polysaccharide is felt. |
| 20.00 | 0.70 | 0.10 | 0.05 | 0.96 | 10.0 | ++ | + | ± | The masking effect is not felt. The unpleasant aftertaste-derived from the polysaccharide is felt. |
| 20.00 | 0.70 | 0.10 | 0.05 | 0.96 | 11.0 | ++ | + | ± | The masking effect is not felt. The unpleasant aftertaste derived from the polysaccharide is felt. |

The same tendency was observed as in Test Example 6.

The same heat-treated sample beverage as Comparative Example 2 was then prepared except that alcohol content was 15 v/v%. The same multiple sample beverages as Comparative Example 2 were further prepared except that indigestible dextrin was added in predetermined amounts and the alcohol content was 15 v/v%. The obtained sample beverages were sensorily evaluated in the same way as in Test Example 1.

The contents of the minerals, the mineral weight ratios, the contents of the polysaccharide, the sensory evaluation results of the beverages will be shown below.

**[Table 7C]**

| **Mineral (ppm)** | | | | | | **Flavor** | | | |
|---|---|---|---|---|---|---|---|---|---|
| **Na** | **K** | **Ca** | **Mg** | **Mineral weight ratio** | **Polysaccharide w/v%** | **Tingling feeling** | **Unpleasant aftertaste** | **Tastiness** | **Comment (Effect of masking tingling feeling and the like)** |
| 3.30 | 1.60 | 14.80 | 3.30 | 0.14 | 0.0 | ± | + | + | The tingling feeling is originally weak, and the beverage remains tasty. |
| 3.30 | 1.60 | 14.80 | 3.30 | 0.14 | 0.2 | - | ± | ++ | The tingling feeling is originally weak, and the beverage also feels slightly thick and tasty. |
| 3.30 | 1.60 | 14.80 | 3.30 | 0.14 | 0.4 | - | ± | ++ | The tingling feeling is originally weak, and the beverage also feels slightly thick and tasty. |
| 3.30 | 1.60 | 14.8 | 3.30 | 0.14 | 2.0 | - | ± | ++ | The tingling feeling is originally weak, and the beverage also feels slightly thick and tasty. |
| 3.30 | 1.60 | 14.80 | 3.30 | 0.14 | 5.0 | - | ± | ++ | The tingling feeling is originally weak, and the beverage also feels slightly thick and tasty. |
| 3.30 | 1.60 | 14.80 | 3.30 | 0.14 | 10.0 | - | + | + | The tingling feeling is originally weak, and the beverage remains tasty. |
| 3.30 | 1.60 | 14.80 | 3.30 | 0.14 | 11.0 | - | ++ | ± | The unpleasant aftertaste derived from the polysaccharide is too strong. |

In the case of the heat treatment, the tingling feeling was weak, and the effect of the polysaccharide or the mineral weight ratios was scarcely observed.

## Claims

1. A non-heat-treated alcoholic beverage,
wherein a weight ratio of a content of sodium to the total content of sodium, potassium, calcium, and magnesium (Na/(Na + K + Ca + Mg)) in the beverage is 0.25 to 0.93, and
the alcoholic beverage comprises at least one polysaccharide selected from the group consisting of polydextrose, indigestible glucan, and indigestible dextrin.

2. The alcoholic beverage according to claim 1, wherein the total content of the polysaccharide in the beverage is 0.2 to 10.0 w/v%.

3. The alcoholic beverage according to claim 1 or 2, wherein the total content of sodium, potassium, calcium, and magnesium in the beverage is 0.01 to 15.0 ppm.

4. The alcoholic beverage according to any one of claims 1 to 3, wherein temperature for the heat treatment is 45°C or more, and treatment time is 1 minute or more.

5. The alcoholic beverage according to any one of claims 1 to 4, wherein an alcohol content is 1 to 15 v/v%.

6. The alcoholic beverage according to any one of claims 1 to 5, comprising carbon dioxide.

7. A method for producing a non-heat-treated alcoholic beverage containing minerals, comprising:
mixing raw materials such that
a weight ratio of a content of sodium to the total content of sodium, potassium, calcium, and magnesium (Na/(Na + K + Ca + Mg)) in the beverage is 0.25 to 0.93, and
the alcoholic beverage comprises alcohol and at least one polysaccharide selected from the group consisting of polydextrose, indigestible glucan, and indigestible dextrin.

8. A method for suppressing a tingling feeling in a non-heat-treated alcoholic beverage containing minerals, comprising:
mixing raw materials such that
a weight ratio of a content of sodium to the total content of sodium, potassium, calcium, and magnesium (Na/(Na + K + Ca + Mg)) in the beverage is 0.25 to 0.93, and
the alcoholic beverage comprises alcohol and at least one polysaccharide selected from the group consisting of polydextrose, indigestible glucan, and indigestible dextrin.
